# EUROPEAN PATENT SPECIFICATION

(11) **EP 1 910 192 B1**
(45) Date of publication and mention of the grant of the patent: **07.11.2012**
(21) Application number: 06778112.0
(22) Date of filing: 01.08.2006
(51) Int. Cl.: B65G 1/137

(54) **A COMMISSIONER MACHINE FOR AUTOMATIC PROCESSING OF ORDERS**
KOMMISSIONIERMASCHINE ZUR AUTOMATISCHEN BEARBEITUNG VON AUFTRÄGEN
MACHINE DE DISTRIBUTION POUR TRAITEMENT AUTOMATIQUE DE COMMANDES

(30) Priority: 03.08.2005 IT BO20050521
(43) Date of publication of application: 16.04.2008
(73) Proprietor: U.T.I.T. S.p.A., 41100 Modena (IT)
(72) Inventor: OGNIBENE, Franco, I-41100 Modena (IT); ALBORESI, Luigi, I-41100 Modena (IT)
(74) Representative: Dall'Olio, Giancarlo
(86) International application number: PCT/EP2006/064923
(87) International publication number: WO 2007/014956

(56) References cited:
- WO-A-2005/009691
- FR-A- 2 696 722
- FR-A1- 2 419 243
- US-A1- 2003 034 356

## Description

### FIELD OF THE INVENTION

The present invention relates to a commissioner device for automatic processing of orders, according to which different products of extensive use (for example pharmaceuticals, video- and audio-cassettes, corsetry, underwear, cosmetics, etc.) are collected in suitable containers and subsequently distributed to the commissioners.

### BACKGROUND OF THE INVENTION

Various types of products are usually contained in respective vertical channel-like storage units, arranged adjacent one to another on the sides of a fixed structure.

The two rows of storage units are situated one beside the other, often inclined, so as to converge upwards.

The so formed structure is usually called "tunnel".

A conveying belt, situated in the area between the two rows of storage units, receives falling products, which are then conveyed to a collecting container, located at one of the conveyor ends.

Means for picking up of selected products from the storage units are placed on the outer sides, or below the rows of storage units.

The number of different kinds of products, from which the orders are composed, increases constantly, and likewise, the order subdivision, that is the demand for more orders with a smaller number of products.

These demands, emerging from the today's market, require bigger flexibility of the devices for order preparation.

Therefore, systems for automatic preparation of orders have been produced in order to satisfy this need for many years.

The examples of such devices can be found in the documents FR 2.696.722 and US 5.271.703.

In both mentioned devices, the active elements of the ejection means include one or more moving member, sliding on both surfaces of the tunnel defined by the two rows of storage units.

The device described in the document FR 2.696.722 includes a belt, which is mounted on rollers, situated on the tunnel opposite ends, and whose function is to close the storage units bottoms, thus supporting the products.

The belt is interrupted in one or more points and extracting means, mounted on carriages moving along guides, are placed between the so obtained belt ends.

In this way, each time the belt is set in rotation and pulls the extracting means moving them below the storage units from which the products are to be picked up.

The disadvantages of this technical solution are obvious, because if, from one side, it is possible to reduce the number of ejectors necessary for the machine operation, however from the other side, the time necessary for the orders preparation is considerably increased.

The time increases still further in case of orders with products of different types and few items for each type.

The arrangement of fixed ejectors, each of which dedicated to only one storage unit, results in high costs of machine construction, due to the large number of necessary elements.

Also the maintenance is more difficult, since the higher number of operating devices leads statistically to a larger number of malfunctions and consequently, of interventions.

On the other hand, a larger number of moving ejectors complicate the machine operation, since it becomes difficult to position all the ejectors always in a region corresponding to the selected storage units, due to obvious space and positioning problems.

It is also to be pointed out that the placing of one of the ejectors limits or even prevents the correct placing of another ejector, or of other ejectors.

It is not possible to use more independent driving belts, because the belt must close the bottom of the storage units.

According to the solution described in the document US 5.271.703, the storage unit bottoms are closed by a plate with grooves, which extend transversely from the machine axis, i.e. toward the central conveying belt.

In this case, fixed ejectors are used for products picked up most frequently, and one or more moving ejectors, driven by respective bands, for products picked up with a lower frequency.

This solution partially resolves the above mentioned problems, however many restrictions remain in regard to moving devices, as for their movements in relation to the other ejectors and for the machine length.

Actually, in both cases, the ejector stroke depends on the length of the driving belts or band, which thus limit the extension of the fixed structure, on which the storage units are mounted.

Excessively long bands or belts cause positioning to be inaccurate and problems with their support and operation.

It can be generally said that these systems, a bit like all the known systems, include one or a series of modules, equipped each with its own electronic controls, and forming the basic unit, defining the preparation tunnel.

The motion of the carriages, transporting the extracting mechanisms, is fundamentally connected to each module, whose length is limited by the driving bands.

Moreover, the malfunction of one carriage with ejector related to one module, causes necessarily the stop of the whole associated module, which results in serious consequences on the whole order preparation line.

FR-2.419.243-A1 describes a commissioning machine with a support structure bearing a plurality of vertical storage units arranged in a row with products piled up thereinside. Ejector means are mounted on a carriage made to move beside the row of storage units, at the bottom thereof. The ejected articles fall down on a conveyor set on the opposite side of the row of storage units.

The commands for controlling the carriage are sent via a bundle of cables connected to the carriage, by means of a flexible band inserted within a groove extending beside the row of storage units.

The carriages are heavy, with motors extending outwards so that the overall carriage takes a lot of space. Bringing the control commands by the cable placed within a groove prevents definitely to place another carriage on the same way. FR-2.419.243-A1 does not mention the provision of more than one carriage.

Published application US-2003/034356-A1 discloses a commissioning machine provided with product storage compartments vertically and horizontally disposed in a shelf. Products piled up in the compartments are ejected by a positionable push-out unit in a direction transverse to the shelves. The push-out unit is made to move under the rows of compartments.

However, this document does not suggest the use of a plurality of carriages for each side of the machine. US-2003/034356-A1 described a double carriage, that is a carriage operating on both sides, that means that the ejector working on the right side is firmly connected to the one working on the left side.

### SUMMARY OF THE INVENTION

The object of the present invention is to propose a machine for automatic processing of orders, in which moving ejectors are used to extract the products from the channel storage units, with a substantial saving in the construction of the ejection means and proposing a machine of a more advantageous cost, but maintaining high production rates, without disadvantages with respect to other known machines.

Another object of the present invention is to propose a machine, in which the failure of one of the moving ejectors does not cause the machine stop or anyway causes only very limited slowing down of the order preparation.

These and other objects are obtained, in accordance with the present invention, by a commissioner machine for automatic processing of product orders in accordance with claim 1.

The machine of the invention is set up to carry out a method for automatic processing of orders in accordance with claim 12.

Other advantageous characteristic features of the invention are reported in the dependent claims.

### BRIEF DESCRIPTION OF THE DRAWINGS

Later on, the invention will be described in detail with reference to the enclosed drawings, in which:
- Figure 1 shows the lower part of the machine, seen at one end, with some parts in section, so as to point out its structure;

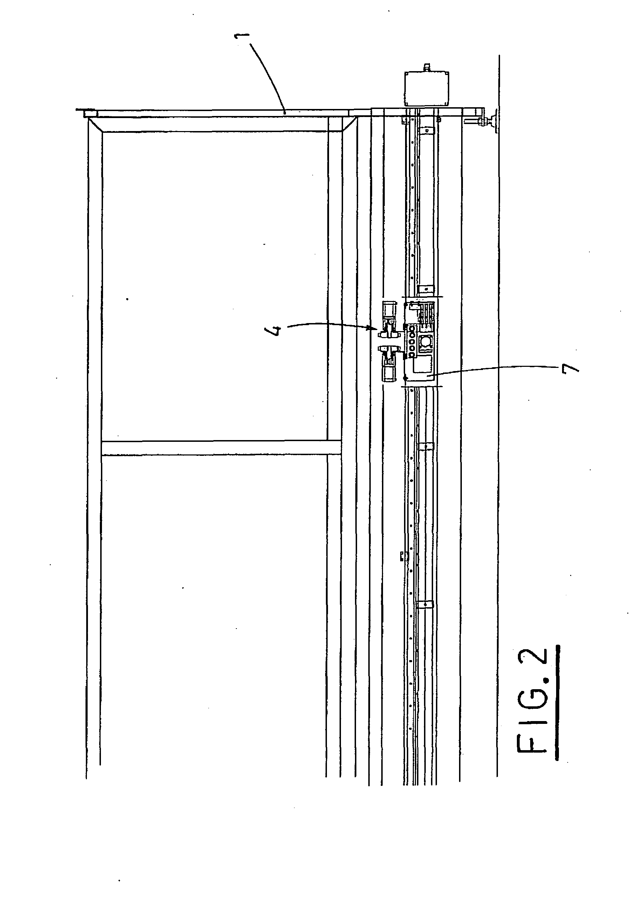

- Figure 2 is a lateral view of a part of the machine of Figure 1, with one of carriages having ejector pointed out;
- Figure 3 is a lateral, section view of one of the ejectors;
- Figure 4 is a structural/functional scheme of the machine proposed by the present invention.

### BEST MODES OF CARRYING OUT THE INVENTION

Having regard to the above mentioned Figures, the reference numeral 1 indicates a fixed structure of a commissioner machine, for automatic processing of orders with products 30 of different types.

Vertical storage units 2, joined to the structure 1, include e.g. facing walls, which move along support guides 3, extending longitudinally with respect to the structure 1.

The bottom of the storage units is partially closed by two flanges, made integral in a known way to the base of the walls forming the storage units and which leave a wider or narrower slit.

The products 30 are piled up within the storage units, so that the lowermost product rests on the bottom closing flaps.

Generally, two rows of storage units are situated inclined, one beside the other, with the tops convergent upwards and joined.

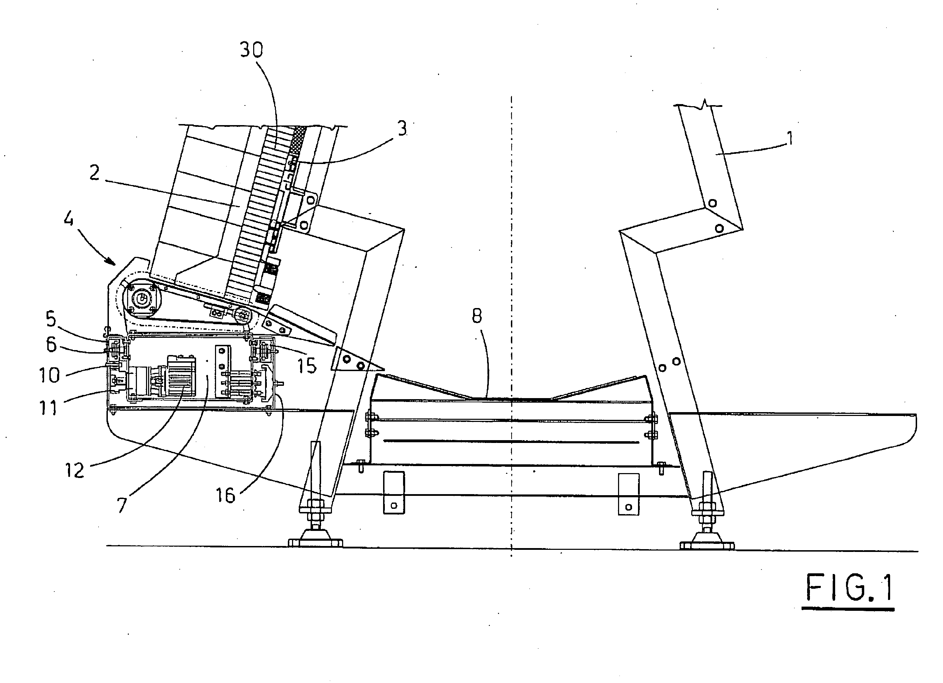

In this way, the so called tunnel structure is defined, as it appears in part, in Figure 1.

It is understood that the invention described afterwards can be applied also in case of only one row of storage units, possibly kept vertical, without, however, falling under the scope of the claims.

The storage unit bottom slits are all turned toward the tunnel inner part.

One or (possibly) more guides 5, 15 are situated near the storage units inner ends, extending longitudinally along the machine tunnel structure 1.

The guide or guides 5, 15, as shown in the Figure, are situated parallel below the two rows of storage units.

In case of two guides, one is outer and the other one is inner with respect to the machine longitudinal axis.

One or more carriages 7 can slide along the guide (or guides).

The guide (Each of the guides) includes flat elements 17, joined along the edges, so as to form a box-like casing, onto which an ejector mechanism is mounted.

It goes without saying that other forms are possible for the casing, which could even be formed by a simple support structure (not shown), for instance formed by plates joined crosswise, which is lighter and easier to move and control.

Pins 13, extending from the casing, have bearings, which engage with the guides 5, 15, to allow the carriage to slide along the guides, parallel to the machine 1. Also in this case, a different way of connecting the carriage to the guide can be used, for instance without roller bearings, in accordance with the technical means known in the art.

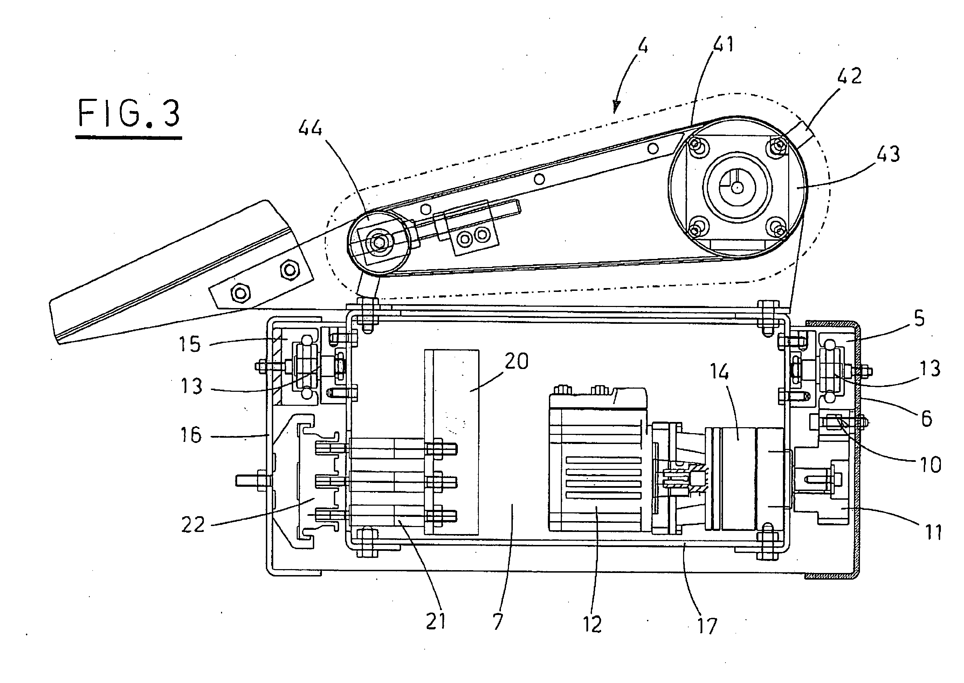

The carriage 7 and the ejector mechanism 4 can be better seen in Figure 3.

The ejector mechanism 4 is not different from known devices of the same type and includes a belt 41, having protruding relieves 42 and mounted on two powered pulleys 43, 44.

The belt movement is transversal with respect to the machine longitudinal direction, that is, it is directed toward the space comprised between the two rows of storage units 2.

The motor operating the belt 41, although present, is not shown in Figures 1 and 3, since not relevant to the invention.

The guide or guides 5, 15 is/are situated at such a level, as to place the belt 41 close to the storage units bottom, while the relieves are kept in such a position, as not to prevent or hinder the carriage 7 movement below the storage units.

A conveying belt 8, sliding in the space between the two rows of storage units, is aimed at receiving products picked up from the storage units and at carrying them toward an end of the machine, where a collecting box 9 is situated.

The general configuration described so far, typically and on a general basis, corresponds to the one of the devices described in the prior art documents FR 2.696.722 and US 5.271.703, mentioned in the introductory note.

Differently from the two mentioned known systems, the machine made according to the invention includes an autonomous driving mechanism for each carriage.

The carriage driving mechanism includes the use of a rack 10, fastened to the structure 1 and meshing with a pinion 11, connected to a brushless motor 12, which is mounted on each carriage (Figure 3).

The rack 10 is oriented according to the machine longitudinal direction and is situated in an area easily accessible to the carriage. The rack is fastened, for example, to support plates 6, 16, fixed singularly or in pairs (as shown in the Figure) on both sides of the structure, in a known way.

The plate or plates are aimed at supporting the guide or guides.

In particular, the rack can be fastened to the plates 6, in a outer position with respect to the machine, i.e. in a position situated below the carriages guides 5.

The brushless motor 12 is situated inside the box-like casing of the carriage 7, so as to be easily connected with the pinion 11, e.g. via a speed reducer 14.

Sliding contacts 21, for supplying power to the motor as well as to the ejector mechanism, are situated on the carriage, touching mating line contacts 22, which extend longitudinally along the machine whole length.

The mating line contacts are situated below the carriages sliding guides 15, on the inner support plates 16.

The motor power supply is controlled by a control unit 20, mounted onto the carriage and radio connected with the machine central control unit 50 and having an electronic processor and suitable software programs.

The control unit 20 includes a receiver and obviously, electronic devices for exchanging data and signals with the central control unit and consequently, for controlling the motor 12 and the ejector mechanism 4 power supply.

In this way, the activation moments and the carriage movement directions are defined.

The machine operation does not differ substantially from the analogous machines, like the ones mentioned in the introductory note.

The central control unit 50, according to the orders loaded to the processor memories, manually or by acquiring means of known type, selects each time the storage unit 2, or the storage units, from which a product, or products, is/are to be picked up, places the carriage 7, or carriages, below the selected storage unit or units, and activates the ejector mechanism.

The belt 41 rotation brings one of the relieves 42 to slide in the storage unit bottom slit, so that the lowermost product of the stack is stripped and moved toward the tunnel inside, so as to fall onto the conveying belt 8, which then conveys it, together with the others, toward the collecting box 9, situated at the machine end.

However, the following advantageous novelties are achieved in the machine obtained according to the invention.

First of all, the substitution of the belt system for operating carriages with the rack/pinion system allows to obtain a machine in a unitary configuration, in contrast to the module system of the prior art.

The carriages can be moved in an independent way, however coordinated one with another, along the whole machine length, whatever it is, because there is no driving belt to cause limits and it is not necessary to build the machine in accordance to the module sections system.

The carriages reciprocal positioning and their respective assignment to the selected storage units each time, are handled by a suitable processing program.

According to the frequency, with which the products are picked up and to the number of picking up operations for each product (high or low product rotation and statistical variability of the storage unit selection), the program is able to assign a proper number of carriages to the more frequently activated machine area, thus making the carriages help each other, when and where necessary.

For example, if the first 30 storage units were selected statistically with a higher frequency with respect to the others for the first 50 orders of the day, the processing program would operate the carriages directly, so as to make one or more of them work in the machine area corresponding to these 30 storage units.

Likewise, in case of malfunction or failure of one or more carriages, the central control unit would be able to change the intervention aspects, by the processing program, so as to compensate for the production of the not working carriage by using in turn the remaining ones.

The number of carriages is arbitrary and there can be only one carriage as well as many carriages, in relation to the needs and required times.

The upgrade of the number of carriages can be gradual, increasing the machine production with time.

The working upgrading of the machine on the basis of the number of present carriages is handled automatically by the central control unit 50, by a proper software program.

It is also possible to change the machine dimensions, for example to increase the channels number, without the need to introduce the changes to the carriages movement system, which are necessary with the prior art machines.

It is sufficient to provide a suitable routine in the software program, which takes into consideration the new number of channels and the new length of the carriages path.

Changes in the number and/or dimensions of the channel storage units can be automatically detected by the carriages, by proving scanning means, such as a video camera, on them and activating a first scanning travel before starting normal operation. By running the scanning travel, the carriages detects the position of the slits and walls of the storage units and a new map of them is determined each time.

The video camera can be advantageously used also to read the bar codes of the products while being ejected. This way, the correctness of the product being ejected and their counting is verified, so ensured and even certified, if requested.

The acceleration during the carriages movements is enough to ensure the order commissioning time equal, or almost equal to the time of a machine with fixed ejectors, obviously with a suitable number of carriages, which anyway allows a considerable saving, due to the smaller number of elements. By providing a lighter carriage, or carriages, a higher speed and quicker accelerations and stops can be performed, so that the displacement time can be further reduced.

The materials used for the longitudinal tracks and the pinions on the carriages can be selected among those with lower friction, longer duration, higher wear resistance and light weight, such as plastic synthetic material.

The radio control of various carriages 7 allows their handling without complicated cabling and controlling their interventions with a maximum flexibility, coordinating the respective actions on the selected storage units.

This is facilitated by the use of the brushless motors, which control, on the basis of the received impulses corresponding to the commands, the movement of the respective carriages precisely and quickly.

A fixed space, inside which the selected products are released, is delimited only virtually on the conveying belt for the preparation of each order.

Therefore, one box 9 is situated at the end of the conveying belt 8 for each of the virtual fixed spaces, destined to the products forming the orders.

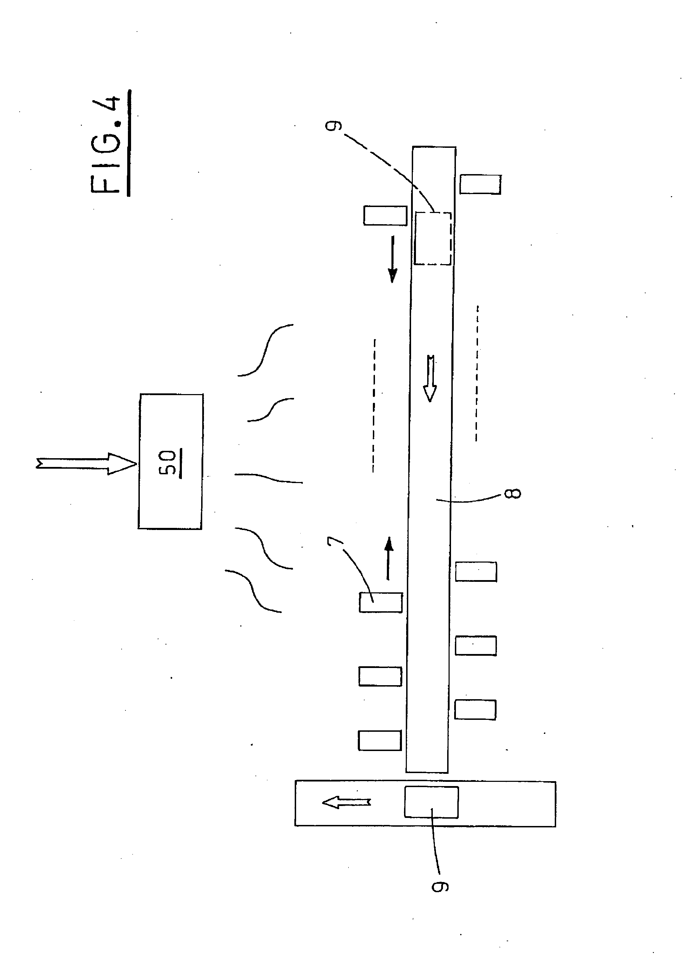

Otherwise, the box can be situated, by suitable automated devices, directly on the conveying belt, as indicated with broken line in Figure 4, in a position corresponding to the fixed space destined to each order.

In this case, the products fall directly into the box.

Obviously, like in case of the prior art documents mentioned in the introductory note, a double configuration of the machine is possible, with equal sections placed one upon the other, known also as "twin" configuration, by applying the invention teachings in a wholly analogous way.

In general, a system is obtained for automatic processing of product orders, in which a commissioner machine includes a support structure (1) with a plurality of storage units (2), extending substantially in vertical and arranged one beside another.

The products 30 are piled up inside said storage units (2) and ejector means 4, for ejecting the products selectively, are carried on a series of carriages 7 moving along the structure 1, at bottom of the storage units 2.

The machine control unit acquires data corresponding to an order, in a known way. Then the carriages are operated by the brushless motors, under control of the control unit, to move autonomously along the structure 1 and locate in positions corresponding to the storage units containing the products forming the order.

The carriages are operated in reciprocal correlation and according to distances, times and sequences defined each time in relation to position of the carriages, to the products to pick up and to machine operation conditions.

The ejector mechanism of each carriage is independently activated and the picked up products are placed on the collecting means 8.

The machine can be added of new sections when this is needed. The computer sill detect the changes and adapt operation of the carriages accordingly. New carriages can be added at any time, with or without and increase of the machine structure.

Also in this case the computer on the control unit will detect the changes and adapt the operation of the system.

## Claims

1. A commissioner machine for automatic processing of product orders, with said machine including:
a support structure (1);
a plurality of storage units (2), extending substantially in vertical and arranged one beside another in at least one row,
with said products (30) piled up inside said storage units (2);
at least one guide (5, 15), extending parallel to the machine and fastened to the support structure (1);
ejector means (4) for ejecting said products selectively,
mounted on a carriage which moves along said at least one guide (5, 15), so that the ejector means is moved along the structure (1) and at bottom of the storage units (2), for carrying at least one ejector means, the carriage being equipped with means for the carriages operation and control and motor means (12, 14) mounted onto the carriage for moving the carriage autonomously along the structure (1), along the whole length of the machine;
collecting means (8) for the products (30) picked up from the storage units;
**characterized in that** the at least one guide (5, 15) is fastened below the storage units (2) and **in that** a plurality of carriages (7) are provided along said at least one guide (5, 15) on both sides of the structure (1), all of said carriages being coordinated with one another.

2. A machine, according to claim 1, further including coupling and meshing means (10, 11), which connect dynamically the motor means (12, 14) of the carriage (7) to said machine structure (1), so as to move the carriage.

3. A machine, according to claim 2, wherein said coupling and meshing means (10, 11) include a pinion (11), connected to said motor means (12, 14), and a rack (10), which extends along the whole length of the machine.

4. A machine, according to claim 1, wherein said motor means include a brushless motor (12).

5. A machine, according to claim 1, wherein said motor means include a brushless motor (12), connected to the pinion (11) by a speed reducer (14).

6. A machine, according to claim 1, wherein sliding contacts for supplying power to said motor means, as well as to the ejector means (4), are situated on the carriage (7) and set to touch sliding line contacts 22 extending longitudinally along the whole length of the machine.

7. A machine, according to claim 6, wherein said linear contacts (22) are fastened to a support plate (16), used for supporting and guiding the carriages (7).

8. A machine, according to claim 1, wherein said guide or said guides (5, 15) are supported by at least one support plate (6, 16),

9. A machine, according to claim 1, wherein said means for operation and control of the carriages (7) include a central control unit (50), radio connected with a receiver situated in a control unit (20), placed onboard of each carriage (7) and acting on said motor means.

10. A machine, according to claim 1, wherein each carriages also includes a video camera for scanning the bottom of the channel storage units to detect number and dimension of each channel storage units, so as to adapt operation of the carriages in accordance with such number and dimension.

11. A machine, according to claim 1, wherein each carriages also includes a video camera for scanning a bar code on each product being ejected.

12. A method for automatic processing of orders by the commissioner machine of claim 1, in which the products are placed inside at least one row of vertical storage units with an ejector mechanism, and then the picked up products are placed on or in collecting means,
said method being **characterized by**:
acquiring data corresponding to an order;
providing a series of carriages on one side of said row of storage units, with said series of carriages having each an ejector mechanism and moved by respective motor means;
placing in sequence the carriages in positions corresponding to the storage units containing the products forming the order and
subsequently operating the respective ejector mechanisms, when the carriages are in positions corresponding to the storage units containing the products forming the order;
wherein the carriages move autonomously, along the whole length of the row of storage units, and the carriages movement is operated in reciprocal correlation and according to distances,
times and sequences defined each time in relation to position of the carriages, to the products to pick up and to machine operation conditions.

13. A method according to claim 12, including the use of central control unit (50), radio connected with a receiver situated in a control unit (20), to define said movements of the carriages (7), with said control unit (20) being placed onboard of each carriage (7) and acting on said motor means.

14. A method according to claim 12, wherein the machine is considered as unitary entity, as far as the operation and moving of each single carriage (7) is concerned.

15. A method according to claim 12, including additional carriages (7), cooperating with one another and with other carriages (7), in reciprocal correlation and according to distances, times and sequences defined each time in relation to position of the carriages, to products to pick up and to machine operation conditions, so as to adapt the machine performance to the changes of the production needs, occurring with time, as well as to the machine length, determined by the length of the row or rows of storage units.

16. A method, according to claim 12, carried out on two rows of storage units, situated one beside the other, so as to define a tunnel.

17. A method, according to claim 16, in which said collecting means include a conveying belt, which is situated below said tunnel and on which fixed portions are virtually defined for receiving products of respective orders.

## Patentansprüche

1. Kommissioniermaschine zur automatischen Bearbeitung von Aufträgen, insbesondere Artikelbestellungen, wobei die Maschine Folgendes beinhaltend:
eine Trägerstruktur (1);
mehrere Lagereinheiten (2), die sich im Wesentlichen in vertikaler Richtung erstrecken und nebeneinander in mindestens einer Reihe angeordnet sind, wobei die genannten Artikel (30) in den Lagereinheiten (2) gestapelt sind;
mindestens eine Führung (5, 15), die sich parallel zur Maschine erstreckt und an der Trägerstruktur (1) befestigt ist;
Ausgabeeinrichtungen (4), die zum selektiven Ausgeben der Artikel dienen und auf einem Wagen montiert sind, der sich entlang mindestens einer Führung (5, 15) bewegt, so dass die Ausgabeeinrichtungen entlang der Struktur (1) und im unteren Bereich der Lagereinheiten (2) bewegt werden, und der mindestens eine Ausgabeeinrichtung trägt, wobei der Wagen mit Einrichtungen für den Betrieb und die Steuerung des Wagens sowie mit Antriebseinrichtungen (12, 14) ausgestattet ist, die auf dem Wagen montiert sind und dazu dienen, den Wagen autonom entlang der Struktur (1) und über die gesamte Länge der Maschine zu bewegen;
Sammeleinrichtungen (8) für die von den Lagereinheiten entnommenen Artikel (30);
**dadurch gekennzeichnet, dass** die mindestens eine Führung (5, 15) unterhalb der Lagereinheiten (2) befestigt ist und dass mehrere Wagen (7) entlang der zumindest einen Führung (5, 15) auf beiden Seiten der Struktur (1) vorgesehen sind, wobei alle Wagen miteinander koordiniert sind.

2. Maschine nach Anspruch 1, die ferner Kupplungs- und Eingriffseinrichtungen (10, 11) beinhalten, welche dynamisch die Antriebseinrichtungen (12, 14) des Wagens (7) mit der Maschinenstruktur (1) verbinden, um den Wagen zu bewegen.

3. Maschine nach Anspruch 2, worin die Kupplungs- und Eingriffseinrichtungen (10, 11) ein Ritzel (11) beinhalten, das mit den Antriebseinrichtungen (12, 14) verbunden ist, und eine Zahnstange (10), die sich entlang der gesamten Maschinenlänge erstreckt.

4. Maschine nach Anspruch 1, worin die Antriebseinrichtungen einen bürstenlosen Motor (12) beinhalten.

5. Maschine nach Anspruch 1, worin die Antriebseinrichtungen einen bürstenlosen Motor (12) beinhalten, der über ein Reduziergetriebe (14) mit dem Ritzel (11) verbunden ist.

6. Maschine nach Anspruch 1, worin Schleifkontakte zur Stromversorgung der Antriebseinrichtungen sowie der Ausgabeeinrichtungen (4) auf dem Wagen (7) angebracht und so eingestellt sind, dass sie gleitend Linearkontakte (22) berühren, die sich in Längsrichtung entlang der gesamten Maschinenlänge erstrecken.

7. Maschine nach Anspruch 6, worin die Linearkontakte (22) an einer Trägerplatte (16) befestigt sind, die zum Tragen und Führen der Wagen (7) dient.

8. Maschine nach Anspruch 1, worin die Führung oder Führungen (5, 15) von mindestens einer Trägerplatte (6, 16) getragen werden.

9. Maschine nach Anspruch 1, worin die Einrichtungen für den Betrieb und die Steuerung der Wagen (7) eine zentrale Steuereinheit (50) beinhalten, die über Funk mit einem Empfänger in einer Steuereinheit (20) verbunden ist, die sich an Bord jedes Wagens (7) befindet und auf die Antriebseinrichtungen wirkt.

10. Maschine nach Anspruch 1, worin jeder Wagen ferner eine Videokamera zum Scannen der Unterseite der Lagereinheiten des Kanals beinhaltet, um Zahl und Größe der Lagereinheiten jedes Kanals zu erfassen und somit den Betrieb der Wagen entsprechend dieser Zahl und Größe anzupassen.

11. Maschine nach Anspruch 1, worin jeder Wagen ferner eine Videokamera zum Scannen eines Strichcodes auf jedem ausgegebenen Produkt beinhaltet.

12. Verfahren zur automatischen Bearbeitung von Aufträgen durch die Kommissioniermaschine von Anspruch 1, worin die Artikel in mindestens einer Reihe vertikaler Lagereinheiten mit einem Ausgabemechanismus abgelegt sind und die entnommenen Artikel dann auf oder in Sammeleinrichtungen abgelegt werden,
wobei das Verfahren durch folgende Schritte gekennzeichnet ist:
Erfassen der Daten bezüglich eines Auftrags;
Bereitstellen einer Reihe von Wagen auf einer Seite der genannten Reihe von Lagereinheiten, wobei die Wagen dieser Reihe jeweils einen Ausgabemechanismus aufweisen und von entsprechenden Antriebseinrichtungen bewegt werden;
aufeinanderfolgendes Anordnen der Wagen in Positionen, die den Lagereinheiten entsprechen, in denen die im Auftrag vorgesehenen Artikel enthalten sind, und anschließendes Betätigen der betreffenden Ausgabemechanismen, wenn die Wagen sich an den Positionen befinden,
die den Lagereinheiten entsprechen, in denen die im Auftrag vorgesehenen Artikel enthalten sind;
worin sich die Wagen autonom entlang der gesamten Länge der Lagereinheitenreihe bewegen und die Bewegung der Wagen in gegenseitiger Beziehung zueinander und entsprechend den Abständen,
Zeiten und Reihenfolgen aktiviert wird, die jeweils in Abhängigkeit von der Position der Wagen, den zu entnehmenden Artikeln und den Betriebsbedingungen der Maschine definiert werden.

13. Verfahren nach Anspruch 12, das die Verwendung der zentralen Steuereinheit (50) beinhaltet, die über Funk mit einem Empfänger in einer Steuereinheit (20) verbunden ist, um die Bewegungen der Wagen (7) zu definieren, wobei die Steuereinheit (20) an Bord jedes Wagens (7) angeordnet ist und auf die Antriebseinrichtungen wirkt.

14. Verfahren nach Anspruch 12, worin die Maschine als unitäre Einheit betrachtet wird, was den Betrieb und die Bewegung jedes einzelnen Wagens (7) betrifft.

15. Verfahren nach Anspruch 12, das zusätzliche Wagen (7) beinhaltet, die untereinander und mit anderen Wagen (7) in gegenseitiger Beziehung zueinander und entsprechend den Abständen, Zeiten und Reihenfolgen die jeweils in Abhängigkeit von der Position der Wagen, den zu entnehmenden Artikeln und den Betriebsbedingungen der Maschine definiert werden, so zusammenwirken, dass die Maschinenleistung an die im Laufe der Zeit eintretenden Änderungen der Artikelerfordernisse sowie an die Maschinenlänge angepasst werden kann, die durch die Länge der Reihe oder der Reihen von Lagereinheiten bestimmt wird.

16. Verfahren nach Anspruch 12, das auf zwei Reihen von Lagereinheiten ausgeführt wird, die derart nebeneinander angeordnet sind, dass sie einen Tunnel bilden.

17. Verfahren nach Anspruch 16, in dem die Sammeleinrichtungen ein Förderband beinhalten, das unterhalb dieses Tunnels angeordnet ist und auf dem virtuell festgelegte Abschnitte für die Aufnahme der Artikel entsprechender Aufträge definiert sind.

## Revendications

1. Une machine de distribution pour le traitement
automatique de commandes de produits, ladite machine comprenant :
une structure de support (1) ;
une pluralité d'unités de stockage (2), s'étendant essentiellement à la verticale et disposées les unes à côté des autres sur au moins une rangée, avec lesdits produits (30) empilés à l'intérieur desdites unités de stockage (2) ;
au moins un guide (5, 15), s'étendant parallèlement à la machine et fixé à la structure de support (1) ;
des moyens extracteurs (4) pour extraire lesdits produits sélectivement, montés sur un chariot qui se déplace le long dudit au moins un guide (5, 15), de sorte que les moyens extracteurs sont déplacés le long de la structure (1) et au niveau du fond des unités de stockage (2), pour porter au moins un desdits moyens extracteurs, le chariot étant équipé de moyens de commande et de contrôle des chariots et de moyens moteurs (12, 14) montés sur le chariot lui-même pour déplacer ledit chariot de façon autonome le long de la structure (1), sur toute la longueur de la machine ;
des moyens (8) de collecte des produits (30) prélevés des unités de stockage ;
**caractérisée en ce que** ledit au moins un guide (5, 15) est fixé sous les unités de stockage (2) et **en ce qu'**une pluralité de chariots (7) sont prévus le long dudit au moins un guide (5, 15) des deux côtés de la structure (1), lesdits chariots étant tous coordonnés entre eux.

2. La machine selon la revendication 1, comprenant en outre des moyens d'accouplement et de mise en prise (10, 11), qui relient dynamiquement les moyens moteurs (12, 14) du chariot (7) à ladite structure (1) de la machine, de manière à mouvoir ledit chariot.

3. La machine selon la revendication 2, **caractérisée en ce que** lesdits moyens d'accouplement et de mise en prise (10, 11) comprennent un pignon (11), relié auxdits moyens moteurs (12, 14), et une crémaillère (10), qui s'étend sur toute la longueur de la machine.

4. La machine selon la revendication 1, **caractérisée en ce que** lesdits moyens moteurs comprennent un moteur brushless (12).

5. La machine selon la revendication 1, **caractérisée en ce que** lesdits moyens moteurs comprennent un moteur brushless (12), relié au pignon (11) par un réducteur de vitesse (14).

6. La machine selon la revendication 1, **caractérisée en ce que** des contacts glissants pour l'alimentation électrique desdits moyens moteurs, ainsi que des moyens extracteurs (4), sont situés sur le chariot (7) et mis en contact avec des contacts linéaires glissants (22) s'étendant longitudinalement sur toute la longueur de la machine.

7. La machine selon la revendication 6, **caractérisée**
**en ce que** lesdits contacts linéaires (22) sont fixés à une plaque de support (16), utilisée pour supporter et guider les chariots (7).

8. La machine selon la revendication 1, **caractérisée**
**en ce que** ledit guide ou lesdits guides (5, 15) sont supportés par au moins une plaque de support (6, 16).

9. La machine selon la revendication 1, **caractérisée**
**en ce que** lesdits moyens de commande et de contrôle des chariots (7) comprennent une centrale de commande (50), reliée par radio à un récepteur situé dans une unité de commande (20), placée à bord de chaque chariot (7) et agissant sur lesdits moyens moteurs.

10. La machine selon la revendication 1, **caractérisée**
**en ce que** chacun des chariots comprend aussi une caméra vidéo pour scanner le fond des unités de stockage en tunnel afin de détecter le nombre et les dimensions de chacune des unités de stockage en tunnel, de manière à adapter le fonctionnement des chariots en fonction de ce nombre et de ces dimensions.

11. La machine selon la revendication 1, **caractérisée**
**en ce que** chacun des chariots comprend aussi une caméra vidéo pour scanner un code à barres sur chaque produit extrait.

12. Un procédé pour le traitement automatique de
commandes par la machine de distribution selon la revendication 1, dans laquelle les produits sont placés à l'intérieur d'au moins une rangée d'unités de stockage verticales à mécanisme d'extraction, les produits prélevés étant ensuite placés sur ou dans des moyens de collecte,
ledit procédé étant **caractérisé par** :
l'acquisition de données correspondant à une commande ;
la prédisposition d'une série de chariots sur un côté de ladite rangée d'unités de stockage verticales, avec les chariots de ladite série ayant, chacun, un mécanisme extracteur et étant mus par des moyens moteurs respectifs ;
le positionnement en séquence des chariots dans des positions correspondant aux unités de stockage contenant les produits constituant la commande, et l'activation suivante des mécanismes extracteurs respectifs, quand les chariots sont dans des positions correspondant aux unités de stockage contenant les produits constituant la commande ;
où les chariots se déplacent de façon autonome, sur toute la longueur de la rangée d'unités de stockage, et le mouvement des chariots est commandé en corrélation réciproque et selon des distances, temps et séquences définis à chaque fois en fonction de la position des chariots, des produits à prélever et des conditions de fonctionnement de la machine.

13. Le procédé selon la revendication 12, comprenant
l'utilisation d'une centrale de commande (50), reliée par radio à un récepteur situé dans une unité de commande (20), pour définir lesdits mouvements des chariots (7), avec ladite unité de commande (20) étant placée à bord de chaque chariot (7) et agissant sur lesdits moyens moteurs.

14. Le procédé selon la revendication 12, **caractérisé**
**en ce que** la machine est considérée comme une entité unitaire, pour ce qui est du fonctionnement et du déplacement de chaque chariot (7).

15. Le procédé selon la revendication 12, comprenant
des chariots (7) supplémentaires, coopérant entre eux et avec les autres chariots (7), en corrélation réciproque et selon des distances, temps et séquences définis à chaque fois en fonction de la position des chariots, des produits à prélever et des conditions de fonctionnement de la machine, de manière à adapter les performances de la machine aux variations des exigences de production, survenant dans le temps, ainsi qu'à la longueur de la machine déterminée par la longueur de la rangée ou des rangées d'unités de stockage.

16. Le procédé selon la revendication 12, mis en oeuvre
sur deux rangées d'unités de stockage, situées côte à côte, de manière à définir un tunnel.

17. Le procédé selon la revendication 16, dans lequel
lesdits moyens de collecte comprennent une bande transporteuse, qui est située au-dessous dudit tunnel et sur laquelle des portions fixes sont virtuellement définies pour recevoir des produits de commandes respectives.
